# EUROPEAN PATENT APPLICATION

(11) **EP 3 427 848 A1**
(43) Date of publication of application: **16.01.2019**
(21) Application number: 18176401.0
(22) Date of filing: 07.06.2018
(51) Int. Cl.: B08B 9/043, B08B 9/045, B21L 11/00, B23K 26/38, E03F 9/00, F16G 13/12, B23K 101/30

(54) **A CLEANING DEVICE FOR INTERNAL CLEANING OF DRAIN OR SEWER PIPES AND A METHOD OF MANUFACTURING A CHAIN FOR A CLEANING DEVICE FOR INTERNAL CLEANING OF DRAIN OR SEWER PIPES**

(30) Priority: 12.06.2017 FI 20175538; 20.06.2017 US 201762522177 P
(71) Applicant: Boldan Oy, 05200 Rajamäki (FI)
(72) Inventor: KIPPO, Kim, 00750 HELSINKI (FI)
(74) Representative: Berggren Oy, Helsinki & Oulu

(57) **Abstract**

The invention relates to a cleaning device (20) for internal cleaning of drain or sewer pipes (30) comprising at least one chain (25) comprising several chain links (10), two end parts (22), to one of which one end of the chain/chains (25) is/are fastened and to another of which another end of the chain/chains (25) is fastened, which end parts (22) each comprise a central opening (24), through which a rotatable element (27) extends. At least some of the chain links (10) of at least one chain (25) of the cleaning device (20) have substantially rectangular outer form having at least one right-angled corner (13) and that these chain links (10) are of hard metal. The invention also relates to a method of manufacturing a chain for the cleaning device, in which the chain links (10) are made by cutting from a hard metal plate, for example by laser cutting.

## Description

The invention relates to a cleaning device for the internal cleaning of drain or sewer pipes. More particularly the invention relates to the cleaning device for the cleaning of drain or sewer pipes according to the preamble of the independent cleaning device claim. The invention also relates to a method of manufacturing a chain for a cleaning device according to the preamble of the independent method claim.

It is known that in maintenance and repair work of drain or sewer pipes and in coating of inner surfaces of drain or sewer pipes and in installing renovation liners inside drain or sewer pipes one important part of the work is to clean the inner surfaces of the drain or sewer pipes to remove any material impurity deposits, for example rust, grease, lime, dirt, crusts and scales. Removal of impurities has been accomplished by the use of cleaning devices comprising a tool, for example steel chains attached to a rotatable arm or cable or wire rope or like. Thus the chains are rotated to centrifugally inside the drain or sewer pipe such that at least part of the chain contacts the inner surface of the drain or sewer pipe and thus the impurities are detached and removed from the inner surfaces and flushed away by means of liquid, typically water flow from the drain or sewer pipe. The chains are rotated by a motor or corresponding means. Thus the cleaning internally of the drain or sewer pipes by the cleaning device is accomplished by rotating a tool by means of the wire rope or the equivalent inside the drain. The tool, i.e. the chain or chains of the cleaning device are formed of links connected together as known from common chain structures, for example of snow chains or lifting chains. The chains can also include claws bent from the chain known of snow chains. A problem is that the chains are not particularly sharp and have a limited wear life. By failing to provide sharp edges, the chains tend to be unable to detach all impurities. A problem of the cleaning devices known form prior art is that the cleaning chains are of similar material of their durability as the drain or sewer pipe itself and therefore the cleaning device is not efficient for all cleaning purposes, especially if the impurities have strong adherence to the inner surface of the drain or the sewer pipe. A disadvantage has also been short life time of the chains.

In US patent publication 9649671 is disclosed a cleaning device for the internal cleaning of drainpipes, including one or more chains including several links, and on one or more sides of one or more links is fastened one or more hard metal blades, which are soldered or welded fast to the link. The fastening of the blades to each link of the chain requires a lot of manufacturing work. In some cases also problems have occurred as the blades have come loose from the link.

An object of the present invention is to provide an improved cleaning device for the internal cleaning of drain or sewer pipes, in which the problems and disadvantages of cleaning devices known from prior art are eliminated or at least minimized.

An object of the present invention is to provide a method of manufacturing a chain for a cleaning device for the internal cleaning of drain or sewer pipes, in which the problems and disadvantages of the manufacturing methods known from prior art are eliminated or at least minimized.

An object of the invention is to introduce a cleaning device which is effective in cleaning and has a long life time.

An object of the invention is to introduce manufacturing a chain for a cleaning device for the internal cleaning of drain or sewer pipes is quick and cost effective.

In order to achieve the above objects and those that will come apparent later the cleaning device according to the invention is characterized by the features of the characterizing part of independent cleaning device claim. The method in turn is characterized by the features of the independent method claim. Advantageous embodiments and features are defined in dependent claims.

According to the invention the cleaning device for internal cleaning of drain or sewer pipes comprising at least one chain with several chain links, two end parts, to one of which one end of the chain/chains is/are fastened and to another of which another end of the chain/chains is fastened, which end parts each comprise a central opening, through which a rotatable element extends, wherein at least some of the chain links of at least one chain of the cleaning device have substantially rectangular outer form having at least one right-angled corner and these chain links are of hard metal.

According to an advantageous feature of the invention the cleaning device comprises at least three chains.

According to an advantageous feature of the invention all chain links have a substantially rectangular outer form having at least one right-angled corner.

According to an advantageous feature of the invention the chain links comprise an internal opening having a substantially rectangular form with rounded corners.

According to an advantageous feature of the invention the chain links have a thickness and link structure of the chain link has a three dimensional substantially rectangular outer form and that the thickness T is 2 - 10 mm.

According to an advantageous feature of the invention the substantially rectangular outer form of the chain links comprises two short sidewalls and two long sidewalls and at one short side wall a cut is formed for forming an opening for attachment of two next to each other located chain links together to form the chain.

According to an advantageous feature of the invention hardness of the hard metal is at least 300 HB.

According to the invention in the method of manufacturing a chain for a cleaning device for the internal cleaning of drain or sewer pipes the chain links are made by cutting from a hard metal plate, for example by laser cutting.

According to an advantageous feature of the invention ends of the chain/chains is/are attached to the corresponding end parts by welding.

The invention is applicable in many different types of sewer and drain pipes with various diameters and a cleaning device with many advantages is achieved. Cleaning device for the internal cleaning of drain or sewer pipes according to the invention and its advantageous features is sharp and provides for efficient cleaning due to the right-angle corners of the chain links and has a long life time and good durability due to the hard metal material of the chain links. Manufacturing of the chains for the cleaning device is work saving and cost effective as there is no need use of extra blades to be attached to the chain links and thus no need for separate fastening welding of the blades. Also cleaning zone of each chain is wider and more uniform as the whole chain and its chain links provide for the cleaning effect. Further the lifetime will be longer as each chain link has larger wear surface. Additionally clogging risks of drain and sewer pipes will decrease as the cleaning zone is wider and thus impurities and like on the inner surfaces of the drain and sewer pipes will be more effectively removed.

In the following the invention is described in more detail by reference to the accompanying drawing in which
Fig. 1 shows schematically a simplified example of a cleaning device according to the invention,
Fig. 2 shows schematically a simplified example of a link of a chain of a cleaning device for internal cleaning of drain or sewer pipes according to the invention,
Fig. 3 shows schematically a simplified example of a cleaning device according to the invention in a drain or a sewer pipe.

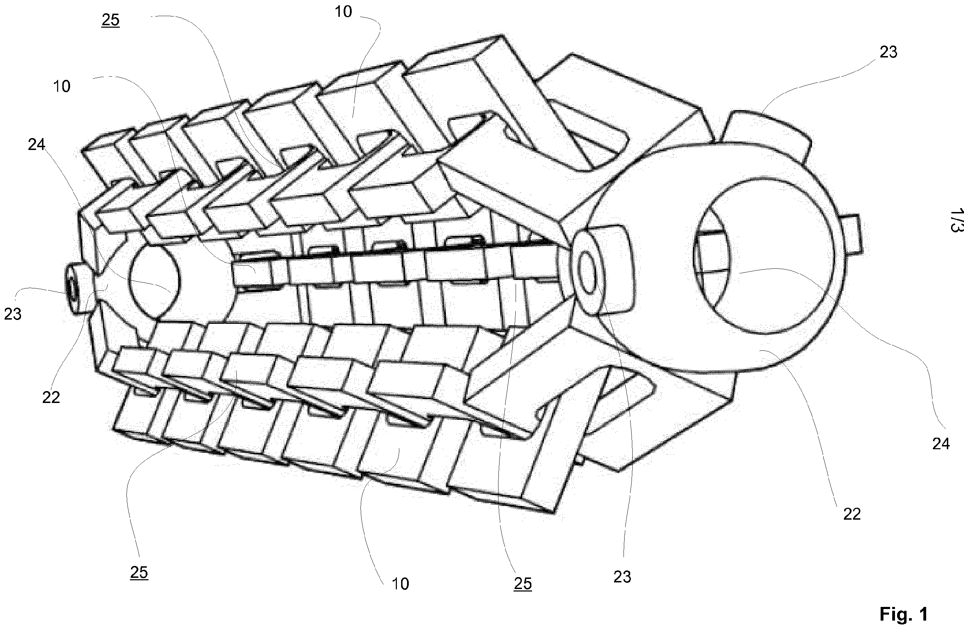

During the course of the following description of the figures 1 - 3 corresponding reference numbers and signs will be used to identify corresponding elements, parts and part components unless otherwise mentioned. In the figures some references sign may have not been repeated for clarity reasons.

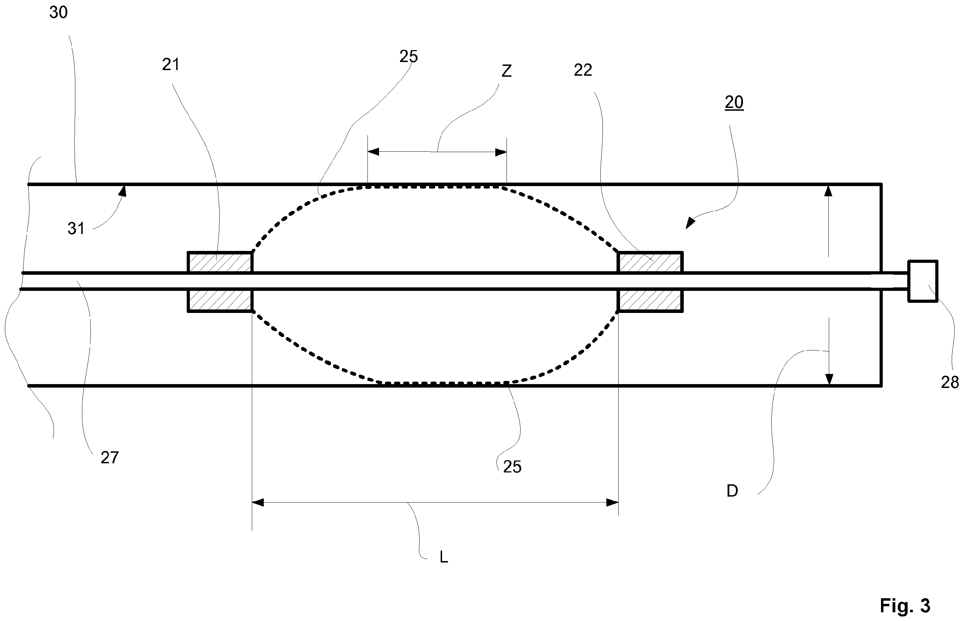

In figure 1 is shown schematically a simplified example of a cleaning device 20 comprising one or more chains 25 formed of several chain links 10. In the example of the figure the cleaning device 20 comprises three chains 25. The cleaning device 20 comprises at least one chain 25. The cleaning device also comprises two end parts 22 in between of which the chains 25 extend and to which end parts 22 respectively each end of each chain 25 is fastened, for example by welding or by screw fastening. The end parts 22 comprise a central through opening 24, through which the rotatable wire rope or rotatable arm or rotatable cable or like rotatable element 27 extends, figure 3. The end part 22 also comprises at least one screw 23 that extends to the through opening 24 for fastening the end part 22 to the desired location on the rotatable element 27 so that the end parts 22 are at required distance L from each other on the rotatable element 27 and that the end part 22 is fastened non-rotatably in the rotatable element 27, figure 3.

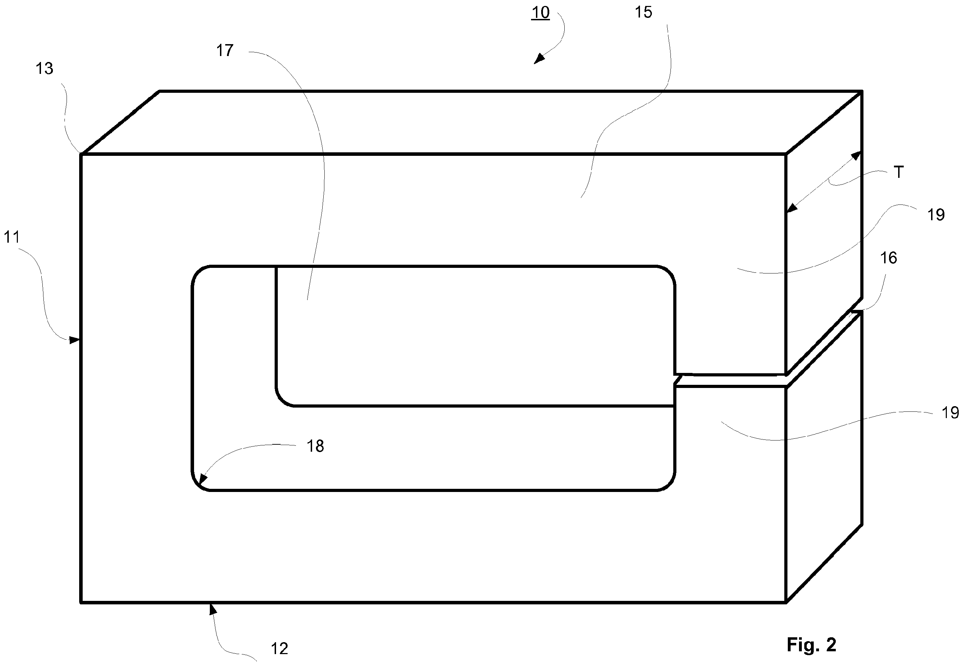

The chain links 10 are connected to each other by pressing loop ends 19, figure 2, against or towards each other such, that cut 16, figure 2, will not allow the chain links 10 to detach, whereby the chain 25 is formed.

In figure 2 is shown schematically a simplified example of a chain link 10 for the cleaning device 20, figure1, which has a substantially rectangular outer form comprising two short sidewalls 11 and two long sidewalls 12 with right-angled corners 13. The outer form of the chain link 10 comprises at least one right-angled corner 13, advantageously all corners 13 are right-angled. The inner form of the chain link 10, i.e. the form of the opening 17 of the chain link 10 is correspondingly substantially rectangular but with rounded right-angled corners 18. The form of the opening 17 can also deviate from the rectangular form but is advantageously without sharp corners to provide the smoot movement of the chain links 10 in the chain 25, figure1. The chain links 10 are advantageously made by cutting from a hard metal plate, for example by laser cutting, such that the chain link 10 has a thickness T. The link structure 15 has thus a three dimensional substantially rectangular outer form i.e. the end walls and the side walls form a right-angled structure. At one short side wall 11 a cut 16 is formed for forming an opening for attachment of chain links 10 together to form the chain 25, figure 1. The chain links 10 will thus be connected to each other to form the chain 25, figure 1, by pressing loop ends 19 of the link structure 15 against or towards each other such, that cut 16 will be narrowed such that the cut 16 will not allow the chain links 10 of the chain 25 to detach.

Thickness T of the link structure 15 is advantageously 2 - 10 mm.

The link 10 is of hard metal which has advantageously hardness of at least 300 HB.

In figure 3 is shown schematically a simplified example of the cleaning device 20 in a drain or a sewer pipe 30. The cleaning device 20 is located inside the pipe 30 such that the chains 25 during rotating the rotatable element 27 contact inner surface 31 of the pipe 30 at cleaning zone Z. The rotatable element 17 is connected to a rotating means 28, for example a rotating motor or rotating drive or pneumatic rotating means. The rotatable element 27 extends through the openings 24, figure 1, of the end parts 22. The end parts 22 are fastened to the desired location on the rotatable by the screws 23, figure 1, so that the end parts 22 are at required distance L from each other on the rotatable element 27, figure 3. The rotatable element 27 is moved in the pipe 30 in its axial direction so that the cleaning zone Z can be moved along the length of the pipe 30. By adjusting the distance L between the end parts 22 the circumferential location of the chains 25 can be adjusted to correspond the inner diameter D of the pipe 30 such that desired cleaning effect and length of the cleaning zone Z is achieved.

The invention is applicable in many different types of drain and sewer pipes of wide range of diameters.

### Reference signs used in the drawing

10 chain link
11 short sidewall
12 long sidewall
13 corner
15 link frame
16 cut
17 opening
18 rounded corner
19 loop end
20 cleaning device
22 end part
23 screw
24 opening
25 chain
27 wire rope
28 rotating means
30 pipe
31 inner surface of the pipe
D diameter
T thickness
L distance
Z zone

## Claims

1. A cleaning device (20) for internal cleaning of drain or sewer pipes (30) comprising at least one chain (25) comprising several chain links (10), two end parts (22), to one of which one end of the chain/chains (25) is/are fastened and to another of which another end of the chain/chains (25) is fastened, which end parts (22) each comprise a central opening (24), through which a rotatable element (27) extends, **characterized in that** at least some of the chain links (10) of at least one chain (25) of the cleaning device (20) have substantially rectangular outer form having at least one right-angled corner (13) and that these chain links (10) are of hard metal.

2. Cleaning device according to claim 1, **characterized in that** the cleaning device (20) comprises at least three chains (25).

3. Cleaning device according to claim 1 or 2, **characterized in that** all chain links (10) have a substantially rectangular outer form having at least one right-angled corner (13).

4. Cleaning device according to any of claims 1 - 3, **characterized in that** the chain links (10) comprise an internal opening (17) having a substantially rectangular form with rounded corners (18).

5. Cleaning device according to any of previous claims, **characterized in that** chain links (10) have a thickness (T) and link structure (15) of the chain link (10) has a three dimensional substantially rectangular outer form and that the thickness (T) is 2 - 10 mm.

6. Cleaning device according to any of previous claims, **characterized in that** the substantially rectangular outer form of the chain links (10) comprises two short sidewalls (11) and two long sidewalls (12) and that at one short side wall (11) a cut (16) is formed for forming an opening for attachment of two next to each other located chain links (10) together to form the chain (25).

7. Cleaning device according to any of previous claims, **characterized in that** hardness of the hard metal is at least 300 HB.

8. Method of manufacturing a chain for a cleaning device according to any of the previous claims, **characterized in that** the chain links (10) are made by cutting from a hard metal plate, for example by laser cutting.

9. Method according to claim 8, **characterized in that** ends of the chain/chains (25) is/are attached to the corresponding end parts (22) by welding or by screw fastening.
